# DEMANDE DE BREVET EUROPEEN

(11) **EP 0 555 108 A1**
(43) Date de publication de la demande: **11.08.1993**
(21) Numéro de dépôt: 93400004.3
(22) Date de dépôt: 05.01.1993
(51) Int. Cl.: E05B 65/16

(54) **Dispositif antivol pour porte de véhicule utilitaire ou de conteneur**

(30) Priorité: 08.01.1992 FR 9200119
(71) Demandeur: Zivanovic, Milovoye, F-92300 Levallois (FR)
(72) Inventeur: Zivanovic, Milovoye, F-92300 Levallois (FR)
(74) Mandataire: Maureau, Philippe

(57) **Abrégé**

Ce dispositif est du type comportant un organe de blocage des vantaux de la porte, pivotant autour d'un axe horizontal, entre une position relevée de blocage des vantaux, par appui contre les pieds (8) de leurs crémones (3), et une position basse de libération. L'organe de blocage est constitué par une pièce tubulaire (14) montée pivotante autour d'un axe horizontal à l'intérieur d'un boîtier fixe (12), et comportant une échancrure (21) s'étendant sur environ 180° de sa périphérie, le plan formant le fond de l'échancrure (21) étant sensiblement vertical en position de blocage des crémones (3) des vantaux et sensiblement horizontal en position libérée des crémones (3) des vantaux.

## Description

La présente invention concerne un dispositif antivol pour porte de véhicule utilitaire ou de conteneur.

Les portes arrière des camions et les portes des conteneurs sont, dans leur forme la plus répandue, des portes à deux vantaux. Le maintien de chaque vantail en position de fermeture de la porte est assuré par la coopération d'une tige ou crémone solidaire de ce vantail et de doigts de retenue solidaires du châssis du camion ou du conteneur. Cette tige, qui est généralement verticale, peut tourner autour de son axe longitudinal sous l'action d'une poignée de manoeuvre prévue à cet effet ; son extrémité inférieure est recourbée à angle droit, et la branche horizontale qui en résulte est conformée pour s'engager entre les doigts de retenue précités solidaires de la partie basse du châssis. Ces dispositifs de retenue ne sont pas inviolables, et leur verrouillage est généralement réalisé au moyen d'un ou plusieurs cadenas qui sont malheureusement aisés à fracturer.

Par la demande de brevet européen n° 89 401018.0 on connaît un dispositif de ce type qui est plus particulièrement destiné au blocage, en position de fermeture, des deux vantaux d'une porte arrière de véhicule utilitaire.

Lorsqu'un camion accoste un quai de chargement ou de déchargement, pour des raisons pratiques et de sécurité, l'espace entre l'arrière du véhicule et le bord du quai est le plus réduit possible. Or, le dispositif objet de la demande européenne précitée comprend un bras de fermeture articulé suivant un axe vertical ou horizontal qui, par pivotement, est susceptible soit d'être appliqué contre les extrémités inférieures ou pieds des crémones des deux vantaux de cette porte et d'être verrouillé dans cette position dans laquelle il assure le blocage de ces deux vantaux, soit après déverrouillage et pivotement autour de son axe vertical ou horizontal, de libérer les pieds des deux crémones précitées et permettre ainsi l'ouverture des deux vantaux de cette porte.

Malheureusement, ce dispositif s'est révélé inadapté en raison de l'exiguïté de l'espace entre l'arrière du véhicule et le front du quai de chargement ou de déchargement.

En outre, la serrure permettant le verrouillage de ce bras pivotant est généralement fixée sur sa face arrière ce qui, de manière évidente, rend l'accès de son entrée, par la clé, difficile voire même impossible lorsque le véhicule est en position d'accostage.

La présente invention vise donc à remédier à l'ensemble des inconvénients précités en fournissant un dispositif antivol du type précité qui soit d'un faible encombrement, suivant l'axe longitudinal du véhicule ou du conteneur, c'est-à-dire suivant l'axe perpendiculaire au plan de l'ouverture destinée à être fermée par les vantaux de la porte, aussi bien en position de blocage qu'en position de libération.

Un autre but visé par ce dispositif est de rendre l'entrée de serrure toujours accessible.

A cet effet, dans le dispositif qu'elle concerne et qui est du type comportant un organe de blocage des vantaux de la porte, pivotable autour d'un axe horizontal, entre une position relevée correspondant au blocage des vantaux, par appui contre les pieds de leur crémone, et une position basse correspondant à leur libération, l'organe de blocage est constitué par une pièce tubulaire pourvue d'une échancrure et montée pivotante autour de son axe horizontal disposé transversalement à l'axe longitudinal du conteneur, c'est-à-dire parallèle au plan de l'ouverture, et logé à l'intérieur d'un boîtier fixe, l'échancrure précitée recouvrant sensiblement la moitié de la paroi cylindrique de cette pièce tubulaire et étant disposée de manière que son plan soit sensiblement vertical lorsque la pièce tubulaire est en position de blocage des vantaux, avec son bord supérieur, en appui contre les pieds des crémones, tandis que dans l'autre position extrême de cette pièce tubulaire, le plan de l'échancrure occupe une position sensiblement horizontale, située en dessous des pieds des crémones de sorte que' les trajectoires de ces derniers, dans le sens de l'ouverture des vantaux de la porte, se trouvent totalement libérées, une serrure disposée sur l'un des côtés latéraux du boîtier fixe permettant de verrouiller la pièce tubulaire en position de blocage des vantaux.

Ainsi, la rotation dans un sens ou dans l'autre de la pièce tubulaire, qui demeure en permanence à l'intérieur de son boîtier, ne modifie en rien l'encombrement du dispositif. En outre, la disposition de la serrure sur un côté latéral du boîtier laisse toujours son entrée accessible, même en position d'accostage du conteneur ou du véhicule utilitaire.

Suivant une forme d'exécution simple de l'invention, la paroi cylindrique de la pièce tubulaire est pourvue d'un prolongement' latéral n'occupant qu'un secteur de cette paroi cylindrique et positionné anugulairement, par rapport à la pièce tubulaire de manière que, lorsque la pièce tubulaire est en position de blocage des vantaux, son bord inférieur soit sensiblement en appui contre le pêne de la serrure, lorsque cette dernière a été manoeuvrée dans le sens du verrouillage.

De toute façon, l'invention sera bien comprise, à l'aide de la description qui suit, en référence au dessin schématique annexé représentant, à titre d'exemple non limitatif, une forme d'exécution de ce dispositif :
Figure 1 est une vue partiellement simplifiée de l'arrière d'un véhicule utilitaire équipé de ce dispositif ;
Figure 2 en est une vue de face en perspective, en position de blocage des vantaux de la porte ;
Figures 3 et 4 en sont des vues en coupe transversale suivant III-III de figure 2, respectivement, en position de blocage et en position de libération de ces vantaux de la porte ;
Figure 5 est une vue en coupe longitudinale suivant V-V de figure 4 ;
Figures 6 et 7 sont des vues en coupe transversale suivant VI-VI de figure 5, respectivement en position de libération et en position de blocage des vantaux de la porte.

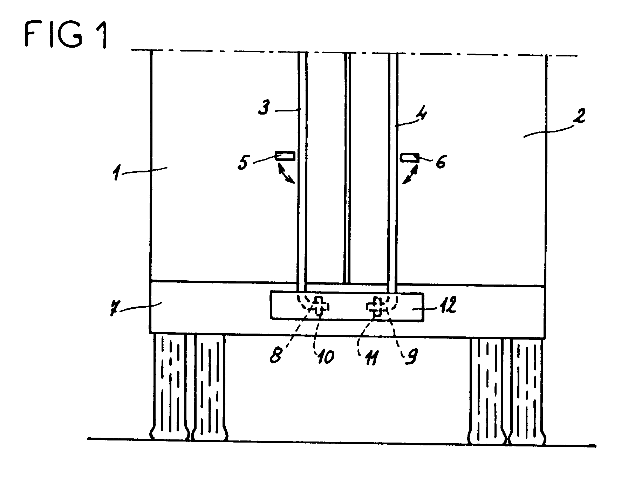

La figure 1 montre l'arrière d'un véhicule utilitaire équipé d'une porte à deux vantaux 1 et 2. Sur chacun d'eux est montée une tige verticale de fermeture ou crémone, respectivement 3 et 4, dont la rotation est commandée par une poignée respectivement 5 et 6.

L'extrémité inférieure ou pied de chaque crémone 3, 4 est située à un niveau inférieur à celui du bord inférieur des vantaux 1, 2 c'est-à-dire au niveau de l'extrémité postérieure du châssis 7 de ce véhicule. Chaque pied de crémones 3, 4 est recourbé à l'horizontal de manière à former une branche inférieure horizontale 8, 9 destinée à être engagée entre des doigts de retenue, respectivement 10 et 11 solidaires du châssis 7.

En l'absence de dispositif de verrouillage, il suffit de manoeuvrer les poignées 5, 6 pour entraîner la rotation des crémones 3, 4 autour de leux axe longitudinal respectif de sorte que les branches 8, 9 se dégagent des paires de doigts respectifs 10, 11 et que les deux vantaux 1, 2 de la porte peuvent être pivotés dans le sens de l'ouverture.

C'est cette rotation des deux vantaux 1, 2 que le dispositif objet de la présente demande tend à rendre impossible.

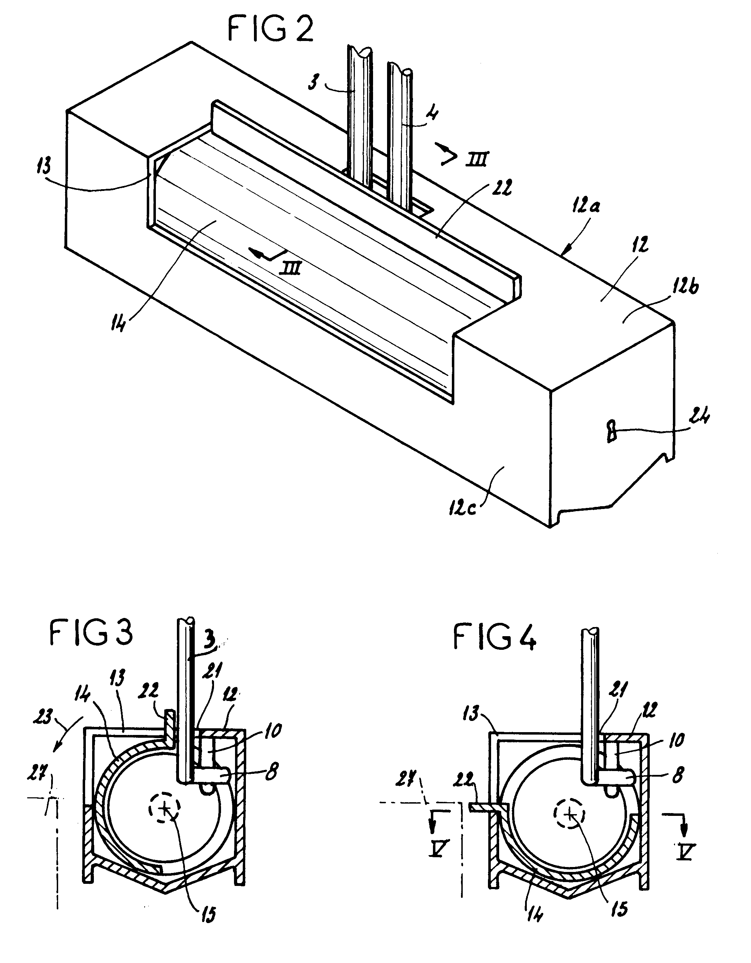

Comme le montre plus particulièrement les figures 2 à 7, le dispositif de l'invention est logé dans un boîtier en métal ou autre matière similaire 12 de forme sensiblement parallélépipèdique rectangle et fixé, par sa face postérieure 12a, contre l'extrémité postérieure du châssis 7. En outre, comme le montre le dessin, ce boîtier 12 présente, dans sa partie antérieure et supérieure, une fenêtre 13 recouvrant partiellement ses parois supérieures 12b et antérieures 12c et laissant apparaître l'organe de blocage 14 monté pivotant à l'intérieur de ce boîtier 12. Cet organe 14 est constitué par une pièce tubulaire qui, dans l'exemple illustré sur le dessin, est de section transversale circulaire. Cette pièce tubulaire 14 est montée libre en rotation autour d'un axe horizontal 15 confondu avec l'axe médian du boîtier 12 c'est-à-dire situé dans un plan vertical parallèle au plan des vantaux 3, 4 de la porte du véhicule.

A cet effet, chaque paroi terminale 14a, 14b de la pièce tubulaire 14 est équipée d'un tourillon, respectivement 16 et 17 coaxial à l'axe 15, et montée dans un palier respectivement 18 et 19 porté par la paroi terminale correspondante respectivement 12d et 12e du boîtier 12.

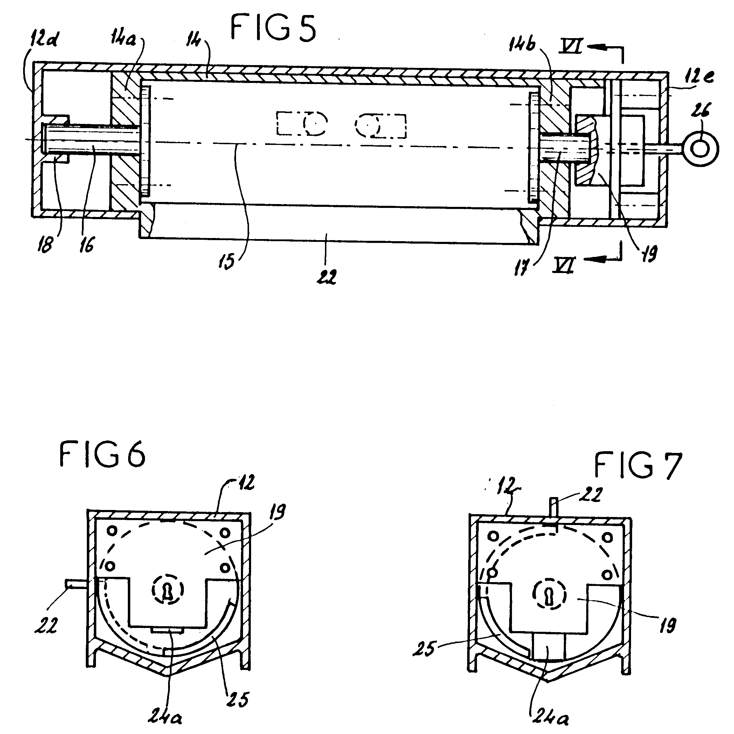

Comme le montre plus particulièrement les figures 3 et 4, la pièce tubulaire 14 présente une échancrure 21 recouvrant sensiblement la moitié de sa paroi cylindrique. C'est-à-dire correspondant sensiblement à un plan diamétral de cette pièce tubulaire.

Lorsque le dispositif de l'invention est en position de blocage des vantaux 1, 2 de la porte c'est-à-dire en position de blocage des crémones 3, 4, l'un des bords de l'échancrures 21, c'est-à-dire le bord supérieur de cette échancrure dans la position d'un blocage de la pièce tubulaire 14 illustrée sur la figure 3, est en appui contre les pieds des crémones 3, 4.

Pour ne pas risquer d'endommager les pieds des crémones 3, 4 par des chocs contre elles du bord supérieur précité de l'échancrure 21, ce dernier est recouvert d'une barrette 22 radialement débordante par rapport à la paroi externe du boîtier 12, à travers la fenêtre 13 de ce dernier. Comme le montre plus particulièrement la figure 4, cette barrette 22 a aussi pour effet de limiter la rotation de la pièce tubulaire 12 dans le sens du déblocage des vantaux 1, 2 de la porte c'est-à-dire dans le sens de la flèche 23 à sa position libérant les trajectoires des pieds des crémones 3, 4 c'est-à-dire à une position dans laquelle l'échancrure 21 est sensiblement horizontale comme illustré sur la figure 4.

Naturellement, le boîtier 12 est fixé au châssis 7 du véhicule de manière que lorsque la pièce tubulaire 12 est en position de déblocage des vantaux 1, 2 de la porte, le plan diamétral de l'échancrure 21 soit en dessous des pieds des crémones 3, 4.

Il faut remarquer qu'avec le dispositif de l'invention, en position de fermeture des vantaux 1, 2, les pieds des crémones 3, 4 sont appui contre le bord postérieur de la fenêtre 13. Cette disposition interdit donc que les doigts de retenue 10, 11 soient portés par le châssis 7 du véhicule. Dans ce cas, ils peuvent tout simplement être fixés à la paroi supérieure 12b du boîtier 12 comme montré plus particulièrement sur les figures 3 et 4.

Naturellement, pour que le dispositif de l'invention soit complet, il faut qu'il soit équipé d'une serrure dont seule l'entrée 24 est visible sur la figure 2. Comme on peut le voir, l'entrée 24 de cette serrure est disposée contre l'une 2e des parois latérales du boîtier 12. Par ailleurs, l'extrémité correspondante de la paroi cylindrique de la pièce tubulaire 14 est munie d'un prolongement 25 n'occupant qu'un secteur de cette paroi cylindrique et positionnée angulairement, par rapport à la pièce tubulaire 14, de manière que, lorsque la pièce tubulaire 14 est en position de blocage des vantaux comme illustré sur la figure 7, son bord inférieur 25a soit sensiblement en appui contre le pêne 24 de la serrure 23, lorsque cette dernière a été manoeuvrée dans le sens du verrouillage comme illustré sur la figure 7. Comme le montre l'examen de cette figure, ce n'est qu'en manoeuvrant la serrure 23 de manière à effacer son pêne 24 que la pièce tubulaire 25 peut pivoter dans le sens opposé à celui de la flèche 23 par libération de son prolongement 25.

Il faut noter que, quelle que soit la position occupée par la pièce cylindrique 12, l'encombrement du dispositif reste constant et qu'en outre, la position de la serrure sur l'une des parois latérales du boîtier 12 maintient en permanence son entrée 24 accessible à sa clé de manoeuvre 26 sans que la proximité d'un quai de chargement ou de déchargement tel que montré en traits mixtes et désigné par la référence 27 sur les figures 3 et 4 ne modifie en quoi que ce soit cette accessibilité.

## Revendications

1. Dispositif antivol pour porte de véhicule utilitaire ou de conteneur, du type comportant un organe de blocage des vantaux (1, 2) de la porte, pivotable autour d'un axe horizontal, entre une position relevée correspondant au blocage des vantaux (1, 2), par appui contre les pieds (3, 4) de leur crémone, et une position basse correspondant à leur libération, caractérisé en ce que l'organe de blocage est constitué par une pièce tubulaire (14) pourvue d'une échancrure (21) , montée pivotante autour de son axe horizontal (15) disposé transversalement à l'axe longitudinal du conteneur, c'est-à-dire parallèle au plan de l'ouverture, et logée à l'intérieur d'un boîtier fixe (12), l'échancrure précitée (21) recouvrant sensiblement la moitié de la paroi cylindrique de cette pièce tubulaire (14) et étant disposée de manière que son plan soit sensiblement vertical lorsque la pièce tubulaire (14) est en position de blocage des vantaux (1, 2), avec son bord supérieur, en appui contre les pieds (3, 4) des crémones, tandis que dans l'autre position extrême de cette pièce tubulaire (14), le plan de l'échancrure (21) occupe une position sensiblement horizontale, située en dessous des pieds (3, 4) des crémones de sorte que les trajectoires de ces derniers, dans le sens de l'ouverture des vantaux (1, 2) de la porte, se trouvent totalement libérées, une serrure (24) disposée sur l'un des côtés latéraux du boîtier fixe (12) permettant de verrouiller la pièce tubulaire (14) en position de blocage des vantaux (1, 2).

2. Dispositif antivol selon la revendication 1, caractérisé en ce que la paroi cylindrique de la pièce tubulaire (14) est pourvue d'un prolongement latéral (25) n'occupant qu'un secteur de cette paroi cylindrique et positionné anugulairement, par rapport à la pièce tubulaire (14) de manière que, lorsque la pièce tubulaire (14) est en position de blocage des vantaux (1, 2), son bord inférieur (25a) soit sensiblement en appui contre le pêne (24) de la serrure (23), lorsque cette dernière a été manoeuvrée dans le sens du verrouillage.

3. Dispositif antivol selon la revendication 1 ou 2, caractérisé en ce que les doigts (10, 11) de retenue des branches horizontales (8, 9) des pieds (3, 4) des crémones sont solidaires de la paroi supérieure du boîtier (12).
